(19) Europäisches Patentamt
European Patent Office
Office européen des brevets

(11) **EP 1 496 373 B1**

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
***G01S 17/36*** *(2006.01)*

(21) Anmeldenummer: **04015729.9**

(22) Anmeldetag: **03.07.2004**

(54) **Optischer Sensor**

Optical sensor

Détecteur optique

(84) Benannte Vertragsstaaten:
**CH DE FR GB IT LI NL**

(30) Priorität: **11.07.2003 DE 10331376**

(43) Veröffentlichungstag der Anmeldung:
**12.01.2005 Patentblatt 2005/02**

(73) Patentinhaber: **Leuze electronic GmbH + Co KG**
**73277 Owen/Teck (DE)**

(72) Erfinder: **Wolf, Tilo**
**73240 Wendlingen (DE)**

(74) Vertreter: **Ruckh, Rainer Gerhard**
**Fabrikstrasse 18**
**73277 Owen/Teck (DE)**

(56) Entgegenhaltungen:
**DE-A- 4 303 804     US-A- 4 229 102**
**US-A- 4 639 129**

EP 1 496 373 B1

**Beschreibung**

Die Erfindung betrifft einen optischen Sensor gemäß dem Oberbegriff des Anspruchs 1.

Ein derartiger optischer Sensor ist aus der DE 43 03 804 A1 bekannt. Dieser weist einen Sendelichtstrahlen emittierenden Sender sowie einen Empfänger, der zum Empfang der von einem Objekt zurückreflektierten Empfangslichtstrahlen dient, auf. Die Distanzbestimmung von Objekten erfolgt dabei nach dem Phasenmessprinzip. Hierzu wird den Sendelichtstrahlen eine Amplitudenmodulation mit einer bestimmten Modulationsfrequenz aufgeprägt. Die Entfernungsmessung erfolgt dann dadurch, dass die Phasendifferenz der von dem jeweiligen Objekt zurückreflektierten Empfangslichtstrahlen bezüglich der Sendelichtstrahlen ausgewertet wird. Die Phasenverschiebung der Empfangslichtstrahlen ist durch die Laufzeit der Empfangslichtstrahlen vom Objekt zum optischen Sensor bewirkt, das heißt die Phasenverschiebung der Empfangslichtstrahlen liefert ein direktes Maß für die Distanz eines Objektes zum optischen Sensor.

Derartige nach dem Phasenmessprinzip arbeitende optische Sensoren weisen generell eine Signalverarbeitungseinheit auf, mittels derer ein periodisches Ausgangssignal generiert wird, welches die die Informationen über die Objektdistanz enthaltende Phasenverschiebung beinhaltet.

In einer Auswerteeinheit wird dann die Phasendifferenz des Ausgangssignals bestimmt und daraus die Objektdistanz berechnet.

Diese Auswertung kann prinzipiell analogtechnisch erfolgen, wie dies beispielsweise bei dem optischen Sensor gemäß der DE 43 03 804 A 1 der Fall ist.

Weiterhin kann auch eine digitale Phasenmessung durchgeführt werden. Ein Beispiel hierfür ist das aus Rainer Joeckel, Manfred Stober "Elektronische Entfernungs- und Richtungsmessung", Wittwer-Verlag, 1999, Seite 62 und folgende, bekannte Nulldurchgangsverfahren. Bei diesem Verfahren wird ein analoges, die Phasenverschiebung enthaltendes sinusförmiges Ausgangssignal mittels geeigneter Triggerstufen in eine periodische Folge von Rechteckimpulsen umgesetzt. Ebenso wird ein ebenfalls sinusförmiges Bezugssignal, welches die gleiche Periodendauer wie das Ausgangssignal aufweist und bezüglich dessen die Phasenverschiebung definiert ist, in eine periodische Referenzfolge von Rechteckimpulsen umgesetzt. Zur Bestimmung der Phasendifferenz wird für jede Periode der zeitliche Versatz der steigenden Flanke der dem Ausgangssignal entsprechenden Folge bezüglich der korrespondierenden steigenden Flanke der Referenzfolge bestimmt.

Hierzu ist eine Zählertorschaltung vorgesehen, welche einen Zähler und einen Impulsgenerator zur Generierung hochfrequenter periodischer Zählimpulse aufweist. Mit der so ausgebildeten Zählertorschaltung wird durch Zählen der Zählimpulse innerhalb des Zeitintervalls zwischen den steigenden Flanken der Folge und der Referenzfolge der zeitliche Versatz dieser Rechteckimpulsfolgen und damit die Phasenverschiebung des Ausgangssignals relativ zum Bezugssignal bestimmt.

Zur Erhöhung der Messgenauigkeit kann über mehrere Perioden des Ausgangssignals hinweg mit der Zählertorschaltung die Phasenverschiebung mehrmals bestimmt werden, wobei aus diesen Einzelmessungen der Mittelwert für die Phasenverschiebung berechnet werden kann.

Nachteilig bei diesem Verfahren ist, dass für eine Periode des sinusförmigen Ausgangssignals prinzipiell nur ein Messwert zur Bestimmung der Phasenverschiebung generiert werden kann. Zur Erhöhung der Messgenauigkeit muss eine Mittelwertbildung der für mehrere Perioden des Ausgangssignals ermittelten Phasenverschiebungen durchgeführt werden, was die Messzeit in unerwünschter Weise erhöht.

Zudem ist nachteilig, dass durch Driften von elektronischen Komponenten der Signalverarbeitungseinheit bewirkte DC-Pegelveränderungen der Folgen der Rechteckimpulse systematische Messfehler bei der Bestimmung der Phasenverschiebung entstehen, welche durch eine Mittelung der Messwerte über mehrere Perioden des Ausgangssignals nicht eliminiert werden können.

Schließlich können bedingt durch die begrenzte Güte der elektronischen Komponenten der Signalverarbeitungseinheit, insbesondere von Bandpassfiltern, systematische Abweichungen des Ausgangssignals von einem exakten Sinusverlauf auftreten. Insbesondere können bei der Generierung des Ausgangssignals in der Signalverarbeitungseinheit der dem idealen Ausgangssignal entsprechenden Sinus-Grundschwingung harmonische Oberschwingungen überlagert sein. Für den Fall, dass sich diese Oberschwingungen nicht exakt gleichphasig oder gegenphasig der Grundschwingung überlagern, entstehen durch die so gebildeten Abweichungen des Ausgangssignals von der Sinus-Grundschwingung weitere systematische Messfehler bei der Bestimmung der Phasendifferenz.

Der Erfindung liegt die Aufgabe zugrunde einen optischen Sensor der eingangs genannten Art bereitzustellen, mit welchem eine möglichst exakte Distanzmessung durchführbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Bestimmung von Distanzen von Objekten innerhalb eines Überwachungsbereichs und weist einen Sendelichtstrahlen emittierenden Sender, einen Empfangslichtstrahlen empfangenden Empfänger, eine Modulationseinheit, mittels derer den Sendelichtstrahlen eine Amplitudenmodulation aufgeprägt ist, eine Signalverarbeitungseinheit zur Generierung eines periodischen Ausgangssignals mit einer ein Maß für die Objektdistanz darstellenden Phasenverschiebung und eine Auswerteeinheit zur Bestimmung der Objektdistanz aus der Phasenverschiebung auf. In der Auswerteeinheit wird jeweils eine Periode des periodischen Ausgangssignals in mehreren Abtastgruppen abgetastet, wobei jede Abtastgruppe eine vorgegebene Anzahl von Abtastwerten enthält, welche von Amplitudenwerten bei jeweils um 90° gegeneinander versetzten Phasenwinkeln des Ausgangssignals gebildet sind. Die korrespondierenden Abtastwerte benachbarter Abtastgruppen sind jeweils um den selben Phasenwinkel gegeneinander versetzt. In der Auswerteeinheit wird für jede Abtastgruppe aus den Abtastwerten die Phasenverschiebung berechnet. Weiterhin werden in der Auswerteeinheit die für die einzelnen Abtastgruppen ermittelten Phasenverschiebungen gemittelt.

Das periodische Ausgangssignal ist insbesondere als sinusförmiges Ausgangssignal ausgebildet. Für diese Ausführungsform wird im Folgenden ohne Beschränkung der Allgemeinheit die Erfindung erläutert.

Der Grundgedanke der Erfindung besteht darin, dass das sinusförmige Ausgangssignal, welches eine ein Maß für die Distanz eines Objektes zum optischen Sensor bildende Phasenverschiebung zu einem vorgegebenen Bezugspunkt aufweist, durch mehrere Abtastgruppen, die jeweils eine vorgegebene Anzahl von Abtastwerten enthalten, abgetastet wird.

Dabei erfolgt die Mehrfachabtastung des sinusförmigen Ausgangssignals derart, dass die einzelnen Abtastwerte der einzelnen Abtastgruppen jeweils innerhalb einer Periode dieses Ausgangssignals derart definiert sind, dass in vorgegebenen Phasenwinkeln die zugehörigen Amplitudenwerte des Ausgangssignals ermittelt werden. Für jede Abtastgruppe wird mittels trigonometrischer Beziehungen aus den Abtastwerten die Phasenverschiebung ermittelt. Danach werden die für die einzelnen Abtastgruppen ermittelten Phasenverschiebungen gemittelt. Durch diese Signalauswertung werden systematische Messfehler bei der Bestimmung der Phasenverschiebung, die insbesondere durch Abweichungen des Ausgangssignals von einem idealen sinusförmigen Verlauf hervorgerufen werden, weitestgehend eliminiert.

Im einfachsten Fall weist jede Abtastgruppe jeweils zwei Abtastwerte auf, welche von den Amplitudenwerten für zwei um 90° versetzte Phasenwinkel des Ausgangssignals gebildet sind. Aus dem Quotienten dieser Amplitudenwerte kann die Phasenverschiebung des Ausgangssignals in bekannter Weise berechnet werden.

In einer besonders vorteilhaften Ausführungsform der Erfindung besteht jede Abtastgruppe aus vier Abtastwerten, welche von den Amplitudenwerten für jeweils um 90° versetzte Phasenwinkel des Ausgangssignals gebildet sind. In diese Fall werden jeweils die Differenzen der beiden um 180° phasenversetzten Amplitudenwerte gebildet und danach aus dem Quotienten der so gebildeten Differenzen die Phasenverschiebung berechnet. Durch diese Auswertung können bereits systematische Messfehler bei der Bestimmung der Phasendifferenz aufgrund von DC-Pegelschwankungen des Ausgangssignals elimiert werden.

Ein wesentlicher Vorteil des erfindungsgemäßen Auswerteverfahrens besteht darin, dass durch die Mehrfachabtastung des Ausgangssignals bei kurzen Messzeiten dennoch eine genaue Distanzmessung ermöglicht wird.

Durch eine geeignete Wahl der Anzahl der Abtastgruppen können systematische Messfehler eliminiert werden, die durch Abweichungen des Ausgangssignals von einem idealen sinusförmigen Verlauf herrühren. Derartige Messfehler ergeben sich durch systembedingte Bauteiltoleranzen der Komponenten der Signalverarbeitungseinheit, insbesondere von Filtern wie zum Beispiel Bandpass- oder Tiefpassfiltern. Durch die begrenzte Güte dieser Bauteile wird aus den Empfangssignalen des Empfängers kein ideales sinusförmiges Ausgangssignal abgeleitet. Vielmehr sind der sinusförmigen Grundwelle eines idealen Ausgangssignals harmonische Oberwellen überlagert.

Durch eine geeignete Wahl der Anzahl der Abtastgruppen können die Einflüsse Oberwellen höherer Ordnung systematisch eliminiert werden, wodurch die Genauigkeit der Bestimmung der Phasenverschiebung und damit die Genauigkeit der Distanzmessung erheblich erhöht werden kann.

Besonders vorteilhaft hierbei ist, dass durch das erfindungsgemäße Auswerteverfahren Fehlerquellen, die durch die begrenzte Güte der elektronischen Komponenten der Signalverarbeitungseinheit bedingt sind, bei der Phasenverschiebung eliminiert werden können, so dass an die Güte dieser Komponenten keine erhöhten Anforderungen gestellt werden müssen.

Voraussetzung zur Durchführung dieses Verfahrens ist, dass die Periodendauer des Ausgangssignals in der Auswerteeinheit bekannt ist, und sich während der Auswertung nicht ändert. Diese Voraussetzung kann durch eine digitale Erzeugung der Frequenz des Ausgangssignals erfüllt werden.

Die Erfindung wird im Nachstehenden anhand der Zeichnungen erläutert. Es zeigen:

Figur 1:    Schematische Darstellung des erfindungsgemäßen optischen Sensors.

Figur 2:    Blockschaltbild der Signalverarbeitungseinheit und Auswerteeinheit des optischen Sensors gemäß Figur 1.

Figur 3:    Verlauf des in der Signalverarbeitungseinheit generierten sinusförmigen Ausgangssignals und eines Referenzsignals.

Figur 4: Schematische Darstellung der Ermittlung der Phasenverschiebung des Ausgangssignals gemäß Figur 3 aus einer Anzahl von Abtastwerten.

Figur 5: Schematische Darstellung der Abtastung des Ausgangssignals gemäß Figur 3 mit einer Anzahl von Abtastgruppen.

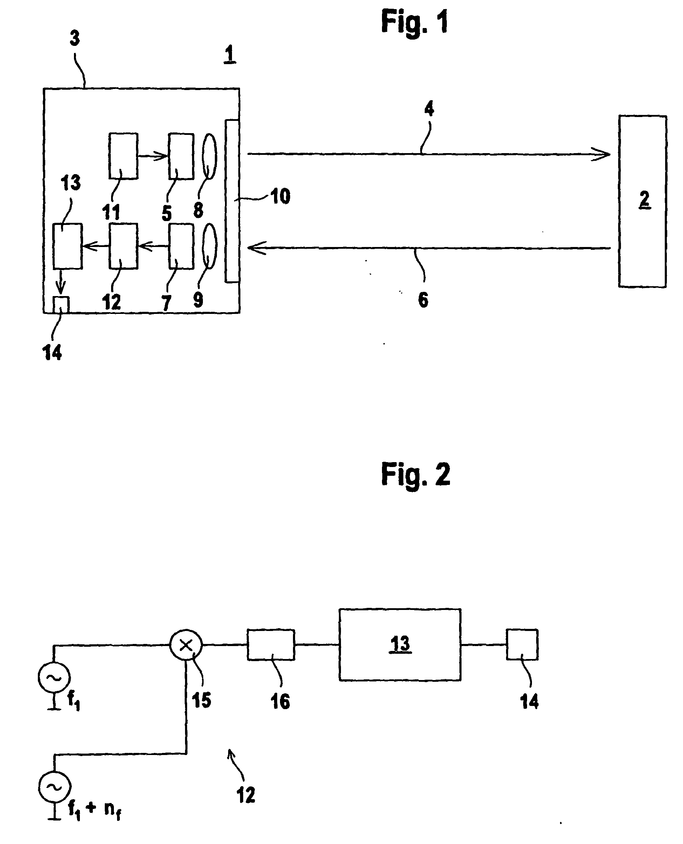

Figur 1 zeigt schematisch den Aufbau eines optischen Sensors 1 zur Bestimmung der Distanzen von Objekten 2 innerhalb eines Überwachungsbereichs. Der in einem Gehäuse 3 integrierte optische Sensor 1 weist einen Sendelichtstrahlen 4 emittierenden Sender 5 und einem Empfangslichtstrahlen 6 empfangenden Empfänger 7 auf. Der Sender 5 ist von einer Laserdiode oder einer Leuchtdiode, der Empfänger 7 von einer Photodiode oder dergleichen gebildet. Dem Sender 5 ist zur Strahlformung eine Sendeoptik 8 nachgeordnet. Die Empfangslichtstrahlen 6 werden mittels einer Empfangsoptik 9 auf den Empfänger 7 geführt. Die Sendelichtstrahlen 4 werden durch ein Austrittsfenster 10 in der Frontwand des Gehäuses 3 in den Überwachungsbereich geführt und treffen auf ein Objekt 2. Die am Objekt 2 zurückreflektierten Empfangslichtstrahlen 6 werden durch das Austrittsfenster 10 zum Empfänger 7 geführt.

Die Distanzmessung erfolgt nach dem Phasenmessprinzip. Hierzu wird den Sendelichtstrahlen 4 mittels einer Modulationseinheit 11 eine Amplitudenmodulation mit einer Modulationsfrequenz $f_1$ aufgeprägt. Die Modulationseinheit 11 besteht aus einem Oszillator oder dergleichen. Die vom Objekt 2 zum Empfänger 7 zurückreflektierten Empfangslichtstrahlen 6 weisen dieselbe Amplitudenmodulation auf, jedoch sind die am Empfänger 7 registrierten Empfangslichtstrahlen 6 bezüglich der vom Sender 5 emittierten Sendelichtstrahlen 4 um eine Phasenverschiebung $\varphi$ entsprechend der Lichtlaufzeit vom optischen Sensor 1 zum Objekt 2 phasenverschoben. Aus dieser Phasenverschiebung $\varphi$ erfolgt in einer Signalverarbeitungseinheit 12 und einer Auswerteeinheit 13 die Bestimmung der Objektdistanz. Die so ermittelten Distanzwerte werden über einen Ausgang 14 ausgegeben.

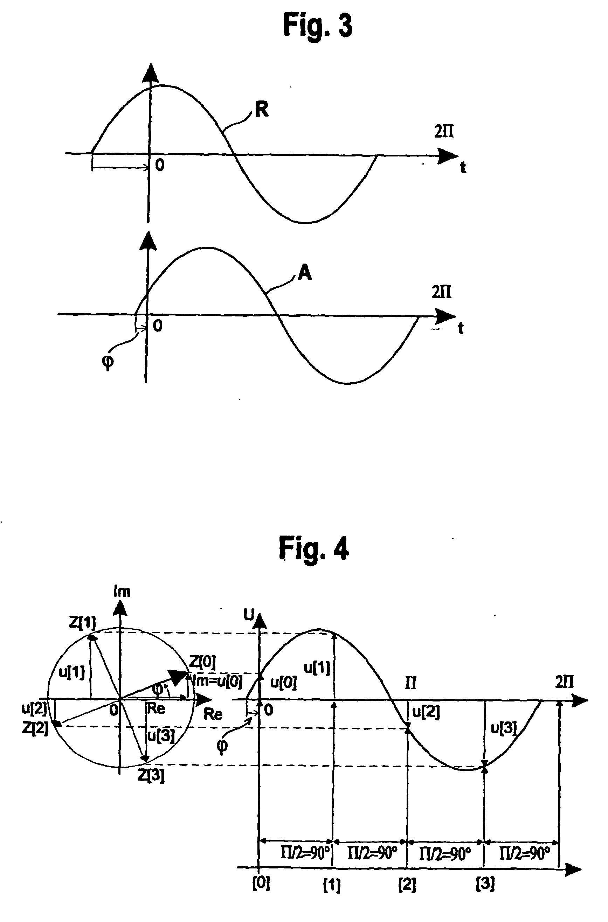

Figur 2 zeigt den Aufbau der Signalverarbeitungseinheit 12 und die nachgeordnete Auswerteeinheit 13. Das die Phasenverschiebung $\varphi$ enthaltende Empfangssignal am Ausgang des Empfängers 7 mit der Frequenz $f_1$ wird mit einer zweiten Frequenz $f_1 + nf$, die in einem weiteren Oszillator oder dergleichen generiert wird, einer Mischstufe 15 zugeführt, die Bestandteil der Signalverarbeitungseinheit 12 ist. Die Frequenzen $f_1$ beziehungsweise $f_1 + nf$ liegen typischerweise im MHz-Bereich. In der Mischstufe 15 wird ein niederfrequentes Signal bei der Differenzfrequenz $nf$ generiert, welche typischerweise im kHz-Bereich liegt. Dieses Signal wird einem Tiefpassfilter 16 zugeführt, der ebenfalls Bestandteil der Signalverarbeitungseinheit 12 ist. Am Ausgang des Tiefpassfilters 16 wird ein sinusförmiges Ausgangssignal A bei der Differenzfrequenz $nf$ erhalten. Das Ausgangssignal A ist in Figur 3 (unteres Diagramm) schematisch dargestellt. Mittels der Signalverarbeitungseinheit 12 wird ein sinusförmiges Ausgangssignal unabhängig davon erhalten, ob den Sendelichtstrahlen 4 eine sinusförmige oder rechteckförmige Amplitudenmodulation aufgeprägt ist.

Wie in Figur 3 dargestellt enthält das sinusförmige Ausgangssignal die Phasenverschiebung $\varphi$, welche ein Maß für die Distanz des mit den Sendelichtstrahlen 4 detektierten Objektes 2 darstellt. Der Bezugspunkt der Phasenverschiebung kann prinzipiell beliebig gewählt werden. Beispielsweise kann der Sendetakt des Senders 5 als Bezugspunkt dienen. Vorteilhafterweise kann der optische Sensor 1 Mittel zur Durchführung einer Referenzmessung aufweisen. Auf diese Weise wird das in Figur 3 (oberes Diagramm) dargestellte Referenzsignal R bei einer Referenz-Frequenz $nf_2$ erhalten. Dann kann das Referenzsignal als Bezugsgröße für die Phasenverschiebung verwendet werden.

In der Auswerteeinheit 13 wird durch Mehrfachabtastung des Amplitudenverlaufs des sinusförmigen Ausgangssignals A die Phasenverschiebung $\varphi$ des Ausgangssignals ermittelt, wonach aus der Phasenverschiebung $\varphi$ der jeweilige Distanzwert errechnet und über den Ausgang 14 ausgegeben wird.

Die Mehrfachabtastung erfolgt dabei derart, dass in der Auswerteeinheit 13 eine vorgegebene Anzahl von Abtastgruppen vorgegeben wird, welche jeweils dieselbe Anzahl von Abtastwerten aufweist.

Figur 4 zeigt schematisch die Abtastung einer Periode des sinusförmigen Ausgangssignals mit einer Abtastgruppe mit vier Abtastwerten. Das rechte Diagramm zeigt den zeitlichen Verlauf des sinusförmigen Ausgangssignals mit der Phasenverschiebung $\varphi$. Das linke Diagramm stellt das entsprechende Zeigerdiagramm für das Ausgangssignal in der komplexen Ebene dar, wobei Im den Imaginärteil und Re den Realteil der entsprechenden komplexen Funktion für das Ausgangssignal bildet. Dass das sinusförmige Ausgangssignal A um die Phasenverschiebung $\varphi$ bezüglich des Nullpunkts als Bezugspunkt verschoben ist, ergibt sich durch dieselbe Phasenverschiebung $\varphi$ in der komplexen Funktion Z im Zeigerdiagramm gemäß der Beziehung

$$Z = |Z|\, e^{-j\varphi}$$

wobei $j = \sqrt{-1}$.

Dementsprechend ergibt sich die Phasenverschiebung $\varphi$ gemäß der Beziehung

$$\varphi = \arctan \frac{\text{Im}(Z)}{\text{Re}(Z)}$$

Um aus dem sinusförmigen Verlauf des Ausgangssignals A die Phasenverschiebung $\varphi$ zu erhalten, wird diese Beziehung ausgenutzt und dementsprechend werden vier um jeweils 90° versetzte Abtastwerte definiert, mit welchen die Phasenverschiebung $\varphi$ ermittelt werden kann. Wie in Figur 4 (rechtes Diagramm) dargestellt sind die vier Abtastwerte durch die Amplitudenwerte des Ausgangssignals U(0), U(1), U(2), U(3) definiert, wobei diese Amplitudenwerte jeweils um 90° zueinander versetzt innerhalb einer Periode des Ausgangssignals liegen.

Wie aus dem Vergleich mit dem Zeigerdiagramm in Figur 4 folgt, stellt die Differenz $D_1 = \frac{1}{2}(U(1) - U(3))$ den Realteil und die Differenz $D_2 = \frac{1}{2}(U(0) - U(2))$ den Imaginärteil der komplexen Funktion des Zeigerdiagramms dar.

Dementsprechend errechnet sich die Phasendifferenz $\varphi$ aus den Abtastwerten U(0), U(1), U(2), U(3) gemäß der Beziehung

$$\varphi = \arctan [ ( U(0) - U(2) ) / ( U(1) - U(3) ) ]$$

Prinzipiell könnte die Phasenverschiebung auch nur mit zwei um 90° versetzten Abtastwerten innerhalb einer Periode des Ausgangssignals berechnet werden. Durch die Abtastung mit vier Abtastwerten ist jedoch gewährleistet, dass DC-Pegelschwankungen des sinusförmigen Ausgangssignals nicht zu Fehlern in der Bestimmung der Phasendifferenz fuhren.

Durch die gewählte Symmetrie der vier über die Periode des Abtastsignals jeweils um 90° versetzten vier Abtastwerte wird zudem erreicht, dass die Phasenverschiebung $\varphi$ exakt auch dann bestimmt wird, wenn dem idealen sinusförmigen Ausgangssignal als Grundwelle harmonische Oberschwingungen geradzahliger Ordnung überlagert sind.

Damit wird durch die Abtastung gemäß Figur 4 erreicht, dass DC-Pegelschwankungen und Verzerrungen des Ausgangssignals gegenüber dem idealen sinusförmigen Verlauf durch Überlagerungen mit Oberschwingungen geradzahliger Ordnung nicht zu einem systematischen Messfehler bei der Bestimmung der Phasenverschiebung führen.

Um auch Effekte von Oberwellen ungeradzahliger Ordnungen systematisch zu eliminieren wird das Ausgangssignal A nicht nur wie in Figur 4 dargestellt mit einer Abtastgruppe, sondern mit mehreren Abtastgruppen abgetastet.

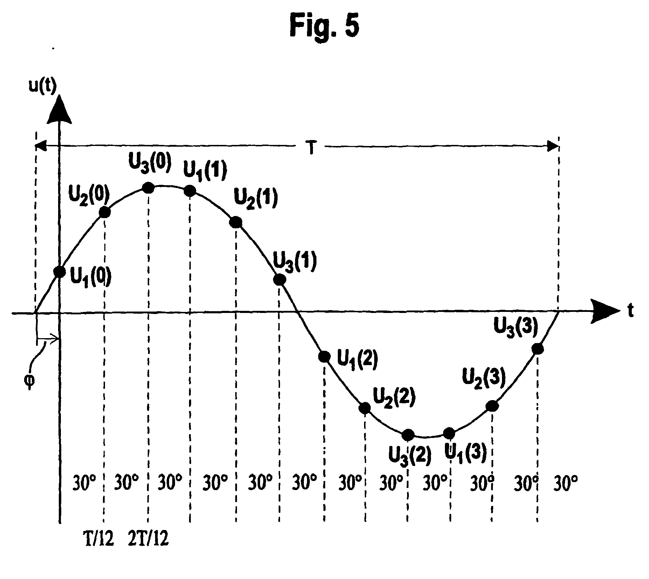

Figur 5 zeigt ein Beispiel einer Periode des sinusförmigen Ausgangssignals A mit drei Abtastgruppen, welche jeweils vier um jeweils 90° versetzte Abtastwerte aufweisen. Die Abtastwerte einer Gruppe i (i = 1, 2, 3) sind von den Amplitudenwerten $U_i(0)$, $U_i(1)$, $U_i(2)$, $U_i(3)$ gebildet. Wesentlich hierbei ist, dass die korrespondierenden Abtastwerte der unterschiedlichen Abtastgruppen jeweils äquidistant, das heißt um jeweils den selben Phasenversatz über die Periode des Ausgangssignals versetzt sind. So sind die jeweils ersten Abtastwerte $U_1(0)$, $U_2(0)$, $U_3(0)$, $U_4(0)$ der vier Abtastgruppen um 30° gegeneinander versetzt. Entsprechendes gilt für die jeweils weiteren Abtastwerte der Abtastgruppe.

Allgemein beträgt der Phasenversatz $\Delta\varphi$ korrespondierender Abtastwerte benachbarter Abtastgruppen

$$\Delta\varphi = 90°/N,$$

wobei N die Anzahl der Abtastgruppen ist.

In der Auswerteeinheit 13 wird für jede Abtastgruppe i analog dem Ausführungsbeispiel gemäß Figur 4 die Phasenverschiebung $\varphi_i$ des Ausgangssignals gemäß folgender Beziehung berechnet.

$$\varphi_i = \arctan [ ( U_i(0) - U_i(2) ) / ( U_i(1) - U_i(3) ) ]$$

Aus den einzelnen Phasenverschiebungen $\varphi_i$ wird durch eine geeignete Mittelung die Phasenverschiebung $\varphi$ gemäß folgender Beziehung berechnet

$$\varphi = 1/N \sum_{i=1} (\varphi_i - (i-1) \cdot \Delta\varphi)$$

wobei $\Delta\varphi$ den Phasenversatz gemäß $\Delta\varphi = 90°/N$ bildet und N die Anzahl der Abtastgruppen bildet.

Mit der so berechneten Phasenverschiebung aus Abtastwerten aus N = 3 Abtastgruppen können Phasenmessfehler durch die Überlagerung der dritten harmonischen Oberwelle zur Grundwelle des idealen sinusförmigen Ausgangssignals vollständig eliminiert werden. Dabei kann die Phase der dritten Oberwelle bezüglich der Grundwelle beliebig liegen.

Durch eine Erweiterung auf vier Abtastgruppen lassen sich zusätzlich auch Phasenmessfehler aufgrund der fünften harmonischen Oberwelle größtenteils eliminieren, wenn deren Phase mit den Phasen der dritten Oberwelle und der Grundwelle übereinstimmt.

Durch eine Erweiterung auf fünf Abtastgruppen lassen sich zusätzlich die Phasenmessfehler aufgrund der fünften harmonischen Oberwelle vollständig eliminieren, wenn deren Phase mit den Phasen der dritten Oberwelle und der Grundschwingung übereinstimmt.

Die Bestimmung der Phasenverschiebung $\varphi$ bei mehr als vier Abtastgruppen erfolgt analog zum Ausführungsbeispiel gemäß Figur 5 und gemäß den dort verwendeten Formeln. Dabei sind die Abtastwerte wiederum gleichmäßig über die Periode des Ausgangssignals mit den Phasenversätzen

$$\Delta\varphi = 90°/N,$$

wobei N die Anzahl der Abtastgruppen ist, verteilt.

Bezugszeichenliste

| | |
|---|---|
| (1) | Optischer Sensor |
| (2) | Objekt |
| (3) | Gehäuse |
| (4) | Sendelichtstrahlen |
| (5) | Sender |
| (6) | Empfangslichtstrahlen |
| (7) | Empfänger |
| (8) | Sendeoptik |
| (9) | Empfangsoptik |
| (10) | Austrittsfenster |
| (11) | Modulationseinheit |
| (12) | Signalverarbeitungseinheit |
| (13) | Auswerteeinheit |
| (14) | Ausgang |
| (15) | Mischstufe |
| (16) | Tiefpassfilter |

| | |
|---|---|
| A | Ausgangssignal |
| $D_1$ | Differenz Realteil |
| $D_2$ | Differenz Imaginärteil |
| $f_1$ | Modulationsfrequenz |
| $f_1 + nf$ | zweite Frequenz |
| Im | Imaginärteil |
| N | Anzahl der Abtastgruppen |
| nf | Differenzfrequenz |
| $nf_2$ | Referenzfrequenz |
| R | Referenzsignal |
| Re | Realteil |

U(0)    Amplitudenwert des Ausgangssignals
U(1)    Amplitudenwert des Ausgangssignals
U(2)    Amplitudenwert des Ausgangssignals
U(3)    Amplitudenwert des Ausgangssignals
$U_i(0)$    Amplitudenwert
$U_i(1)$    Amplitudenwert
$U_i(2)$    Amplitudenwert
$U_i(3)$    Amplitudenwert
$U_i(0)$    Amplitudenwert
$U_2(0)$    Amplitudenwert
$U_3(0)$    Amplitudenwert
$U_4(0)$    Amplitudenwert
Z    komplexe Funktion

$\varphi$    Phasenverschiebung
$\varphi_i$    Phasenverschiebung des Ausgangssignals
$\Delta\varphi$    Phasenversatz

## Patentansprüche

1. Optischer Sensor (1) zur Bestimmung von Distanzen von Objekten (2) innerhalb eines Überwachungsbereichs mit einem Sendelichtstrahlen (4) emittierenden Senden (5), einem Empfangslichtstrahlen (6) empfangenden Empfangen (7), einer Modulationseinheit (11), mittels derer den Sendelichtstrahlen (4) eine Amplitudenmodulation aufgeprägt ist, einer Signalverarbeitungseinheit (12) zur Generierung eines periodischen Ausgangssignals mit einer ein Maß für die Objektdistanz darstellenden Phasenverschiebung und mit einer Auswerteeinheit (13) zur Bestimmung der Objektdistanz aus der Phasenverschiebung, **dadurch gekennzeichnet, dass** in der Auswerteeinheit (13) jeweils eine Periode des periodischen Ausgangssignals in mehreren Abtastgruppen abgetastet wird, wobei jede Abtastgruppe eine vorgegebene Anzahl von Abtastwerten enthält, welche von Amplitudenwerten bei jeweils um 90° gegeneinander versetzten Phasenwinkeln des Ausgangssignals gebildet sind, und wobei die korrespondierenden Abtastwerte benachbarter Abtastgruppen jeweils um den selben Phasenwinkel gegeneinander versetzt sind, dass in der Auswerteeinheit (13) für jede Abtastgruppe aus den Abtastwerten die Phasenverschiebung berechnet wird, und dass in der Auswerteeinheit (13) die für die einzelnen Abtastgruppen ermittelten Phasenverschiebungen gemittelt werden.

2. Optischer Sensor nach Anspruch 1, **dadurch gekennzeichnet, dass** jede Abtastgruppe vier Abtastwerte aufweist.

3. Optischer Sensor nach einem der Ansprüche 1 oder 2, **dadurch gekennzeichnet, dass** der Versatz der Phasenwinkel korrespondierender Abtastwerte benachbarter Abtastgruppen

$$\Delta\varphi = 90°/N$$

beträgt, wobei N die Anzahl der Abtastgruppen ist.

4. Optischer Sensor nach einem der Ansprüche 2 - 3, **dadurch gekennzeichnet, dass** die Phasenverschiebung $\varphi_i$ innerhalb einer Abtastgruppe i gemäß der Beziehung

$$\varphi_i = \arctan [ \, ( U_i(0) - U_i(2) ) / ( U_i(1) - U_i(3) ) \, ]$$

berechnet wird, wobei $U_i$ (i = 0, ... 3) die Amplitudenwerte der Abtastwerte der i-ten Abtastgruppe bilden.

5. Optischer Sensor nach Anspruch 4, **dadurch gekennzeichnet, dass** die für die Entfernungsmessung herangezogene Phasenverschiebung $\varphi$ aus den Phasenverschiebungen $\varphi_i$ für die einzelnen Abtastgruppen gemäß folgender

Beziehung berechnet wird

$$\varphi = 1/N \sum_{i=1}^{N} (\varphi_i - (i-1) \cdot \Delta\varphi)$$

wobei

$$\Delta\varphi = 90°/N$$

und N die Anzahl der Abtastgruppen ist.

6. Optischer Sensor nach einem der Ansprüche 1 - 5, **dadurch gekennzeichnet, dass** den Sendelichtstrahlen (4) mittels der Modulationseinheit (11) eine Amplitudenmodulation mit einer hochfrequenten Messfrequenz ($f_1$) aufgeprägt ist, und dass im Empfänger (7) entsprechend der Objektdistanz von dem Objekt (2) reflektierte, phasenverschobene Empfangslichtstrahlen (6) mit der Messfrequenz ($f_1$) registriert werden.

7. Optischer Sensor nach Anspruch 6, **dadurch gekennzeichnet, dass** die Messsignale des Senders (5) und des Empfängers (7) in der Signalverarbeitungseinheit (12) in das periodische Ausgangssignal umgesetzt werden, dessen Frequenz (nf) erheblich kleiner als die Messfrequenz ($f_1$) der Messsignale ist.

8. Optischer Sensor nach Anspruch 7, **dadurch gekennzeichnet, dass** die Signalverarbeitungseinheit (12) eine Mischstufe (15) aufweist, in welcher die Messfrequenz ($f_1$) mit einer Frequenz ($f_1 + nf$) gemischt wird, wodurch das periodische Ausgangssignal mit der Differenzfrequenz (nf) generiert wird.

9. Optischer Sensor nach Anspruch 8, **dadurch gekennzeichnet, dass** die Signalverarbeitungseinheit (12) einen der Mischstufe (15) nachgeordneten Tiefpassfilter (16) aufweist.

10. Optischer Sensor nach einem der Ansprüche 6 - 9, **dadurch gekennzeichnet, dass** die mit der Messfrequenz ($f_1$) amplitudenmodulierten Sendelichtstrahlen (4) einen sinusförmigen oder rechteckförmigen Verlauf aufweisen.

## Claims

1. Optical sensor (1) for determining distances of objects (2) within a monitoring region, comprising a transmitter (5) emitting transmitted light beams (4), a receiver (7) receiving received light beams (6), a modulation unit (11), by means of which amplitude modulation is imposed on the transmitted light beams (4), a signal processing unit (12) for generating a periodic output signal with a phase displacement representing a measure for the object distance, and an evaluating unit (13) for determining the object distance from the phase displacement, **characterised in that** a respective period of the periodic output signal is scanned in the evaluating unit (13) in several scanning groups, wherein each scanning group contains a predetermined number of scanning values formed by amplitude values in the case of phase angles of the output signal mutually displaced by 90°, and wherein the corresponding scanning values of adjacent scanning groups are respectively offset relative to one another by the same phase angle, that the phase displacement is calculated in the evaluating unit (13) for each scanning group from the scanning values and that the phase displacements ascertained for the individual scanning groups are averaged in the evaluating unit (13).

2. Optical sensor according to claim 1, **characterised in that** each scanning group has four scanning values.

3. Optical sensor according to one of claims 1 and 2, **characterised in that** the offset amounts to the phase angle of corresponding scanning values of adjacent scanning groups, wherein N is the number of scanning groups.

4. Optical sensor according to one of claims 2 and 3, **characterised in that** the phase displacement $\varphi_i$ within a scanning

group i is calculated according to the equation

$$\varphi_i = \arctan\left[\ (U_i(0) - U_i(2)) / (U_i(1) - U_i(3))\ \right]$$

wherein $U_i$ (i = 0, ... 3) form the amplitude values of the scanning values of the $i^{th}$ scanning group.

**5.** Optical sensor according to claim 4, **characterised in that** the phase displacement $\varphi$ utilised for the distance measurement is calculated from the phase displacements $\varphi_i$ for the individual scanning groups according to the following equation

$$\varphi = 1/N \sum_{i=1}^{N} (\varphi_i - (i-1) \cdot \Delta\varphi)$$

wherein

$$\Delta\varphi = 90°/N$$

and N is the number of the scanning groups.

**6.** Optical sensor according to one of claims 1 to 5, **characterised in that** an amplitude modulation with a high-frequency measurement frequency ($f_1$) is imposed on the transmitted light beams (5) by means of the modulation unit (11) and that phase-displaced received light beams (6) with the measurement frequency ($f_1$) reflected in correspondence with the object distance from the object (2) are registered in the receiver (7).

**7.** Optical sensor according to claim 6, **characterised in that** the measurement signals of the transmitter (5) and the receiver (7) are converted in the signal processing unit (12) into the periodic output signals having a frequency (nf) considerably smaller than the measurement frequency ($f_1$) of the measurement signals.

**8.** Optical sensor according to claim 7, **characterised in that** the signal processing unit (12) comprises a mixer stage (15) in which the measurement frequency ($f_1$) is mixed with a frequency ($f_1$ + nf), whereby the periodic output signal with the difference frequency (nf) is generated.

**9.** Optical sensor according to claim 8, **characterised in that** the signal processing unit (12) comprises a low-pass filter (16) downstream of the mixer stage (15).

**10.** Optical sensor according to one of claims 6 to 9, **characterised in that** the transmitted light beams (4) modulated in amplitude by the measurement frequency ($f_1$) have a sinusoidal or rectangular course.

**Revendications**

**1.** Capteur optique (1) pour déterminer la distance d'objets (2) dans une zone de surveillance avec un émetteur (5) émettant des rayons lumineux d'émission (4), un récepteur (7) recevant des rayons lumineux de réception (6), une unité de modulation (11) au moyen de laquelle une modulation d'amplitude est imposée aux rayons lumineux d'émission (4), une unité de traitement de signaux (12) pour générer un signal de sortie périodique avec un déphasage représentant une mesure de la distance de l'objet et avec une unité d'évaluation (13) pour déterminer la distance de l'objet à partir du déphasage, **caractérisé par le fait que** dans l'unité d'évaluation (13), on échantillonne chaque fois une période du signal de sortie périodique dans plusieurs groupes d'échantillonnage, chaque groupe d'échantillonnage contenant un nombre prédéfini de valeurs d'échantillonnage qui sont formées de valeurs d'amplitude à des angles de phase du signal de sortie décalés chaque fois de 90° les uns par rapport aux autres, et les valeurs d'échantillonnage correspondantes de groupes d'échantillonnage voisins étant chaque fois décalées du même angle de phase les unes par rapport aux autres, que dans l'unité d'évaluation (13) on calcule le déphasage pour chaque groupe d'échantillonnage à partir des valeurs d'échantillonnage et que dans l'unité d'évaluation (13) on fait la moyenne des déphasages déterminés pour les différents groupes d'échantillonnage.

2. Capteur optique selon la revendication 1, **caractérisé par le fait que** chaque groupe d'échantillonnage présente quatre valeurs d'échantillonnage.

3. Capteur optique selon l'une des revendications 1 ou 2, **caractérisé par le fait que** le décalage des angles de phase de valeurs d'échantillonnage correspondantes de groupes d'échantillonnage voisins est

$$\Delta\varphi = 90°/N$$

où N est le nombre de groupes d'échantillonnage.

4. Capteur optique selon l'une des revendications 2 ou 3, **caractérisé par le fait que** le déphasage $\varphi_i$ à l'intérieur d'un groupe d'échantillonnage i est calculé selon la relation

$$\varphi_i = \text{arc tan } [(U_i(0) - U_i(2)) / (U_i(1) - U_i(3))]$$

où $U_i$ (i = 0, ... 3) sont les valeurs d'amplitude des valeurs d'échantillonnage du $i^{\text{ème}}$ groupe d'échantillonnage.

5. Capteur optique selon la revendication 4, **caractérisé par le fait que** le déphasage $\varphi$ utilisé pour la mesure de distance est calculé à partir des déphasages ($\varphi_i$ pour les différents groupes d'échantillonnage selon la relation suivante

$$\varphi = 1/N \sum_{i=1}^{N} (\varphi - (i-1) \cdot \Delta\varphi)$$

où

$$\Delta\varphi = 90°/N$$

et N est le nombre de groupes d'échantillonnage.

6. Capteur optique selon l'une des revendications 1 à 5, **caractérisé par le fait que** l'on impose aux rayons lumineux d'émission (4) une modulation d'amplitude à une fréquence de mesure élevée ($f_1$) au moyen de l'unité de modulation (11) et que l'on enregistre dans le récepteur (7) des rayons lumineux de réception (6) à la fréquence de mesure ($f_1$), déphasés et réfléchis par l'objet (2) en fonction de la distance de l'objet.

7. Capteur optique selon la revendication 6, **caractérisé par le fait que** les signaux de mesure de l'émetteur (5) et du récepteur (7) sont convertis dans l'unité de traitement de signaux (12) en un signal de sortie périodique dont la fréquence (nf) est beaucoup plus petite que la fréquence de mesure ($f_1$) des signaux de mesure.

8. Capteur optique selon la revendication 7, **caractérisé par le fait que** l'unité de traitement de signaux (12) présente un étage mélangeur (15) dans lequel la fréquence de mesure ($f_1$) est mélangée avec une fréquence ($f_1$ + nf) afin de générer le signal de sortie périodique à la fréquence de différence (nf).

**9.** Capteur optique selon la revendication 7, **caractérisé par le fait que** l'unité de traitement de signaux (12) présente un filtre passe-bas (16) à la suite de l'étage mélangeur (15).

**10.** Capteur optique selon l'une des revendications 6 à 9, **caractérisé par le fait que** les rayons lumineux d'émission (4) modulés en amplitude à la fréquence de mesure ($f_1$) présentent une allure sinusoïdale ou rectangulaire.

## Fig. 1

**3** **1**

**13**

**11** **5** **8** **10**

**4**

**2**

**12** **7** **9** **6**

**14**

## Fig. 2

**13**

**15** **16** **14**

$f_1$

$f_1 + n_f$

**12**

# Fig. 3

# Fig. 4

# Fig. 5